# EUROPEAN PATENT APPLICATION

(11) **EP 2 783 579 A1**
(43) Date of publication of application: **01.10.2014**
(21) Application number: 12851267.0
(22) Date of filing: 19.11.2012
(51) Int. Cl.: A23L 2/00, A23L 2/38

(54) **pH-ADJUSTED NON-ALCOHOLIC BEER WITH LOW EXTRACT CONTENT**

(30) Priority: 22.11.2011 JP 2011255388
(71) Applicant: Suntory Holdings Limited, Osaka-shi, Osaka 530-8203 (JP)
(72) Inventor: TERANISHI, Takeshi, Fuchu-shi Tokyo 183-8533 (JP); MOTOHASHI, Itsuki, Fuchu-shi Tokyo 183-8533 (JP)
(74) Representative: Vossius & Partner
(86) International application number: PCT/JP2012/079973
(87) International publication number: WO 2013/077292

(57) **Abstract**

The present invention provides a beer-taste beverage with a low total amount of an extract component(s), that is provided with the robust feel. Specifically, the present invention provides a beer-taste beverage with a low total amount of an extract component(s), having a pH adjusted to a specific range to provide the robust feel to the beverage.

## Description

### TECHNICAL FIELD

The present invention relates to a low-extract, beer-taste beverage having a robust feel, a production method of such a beer-taste beverage, and a method for adding the robust feel to a low-extract-component, beer-taste beverage.

### BACKGROUND ART

As more consumers are becoming health-conscious, the demand for low-calorie or low-saccharide articles has also increased in the market of beverages of taste such as beer, *happoshu,* and beer-taste beverages. Specific examples the demand for which has been growing include light beer and various beer-taste beverages such as low-calorie type and low-saccharide type. In addition, stricter penalties on drunk driving as introduced by the recent revision of the Road Traffic Act has boosted the demand for low-alcohol or non-alcoholic (0.00% alcohol) beer-taste beverages. One method for designing the above types of health-oriented beer-taste beverages is to make them low in the extract components. However, a beer-taste beverage having a low total amount of an extract component(s), that is, a low-extract-component, beer-taste beverage was not necessarily sufficient in the robust feel. Hence, it is an essential issue to provide the robust feel to beverages, especially beer-taste beverages that have a low alcohol content, or are alcohol-free.

Several reports have been made concerning the savor of non-alcohol beer beverages. Patent Document 1 discloses a non-alcohol beer containing additives including flavors, colorants, and pH conditioners, at weight fraction of 0.01 to 5%, and having a savor that is equivalent to existing brewed beer. Patent Document 2 discloses a beer-like beverage produced from soy bean peptide powder, sodium carboxymethyl cellulose (CMC) and the like, that has a pH of 3.6 to 4.8, a total acid content of from 0.18 parts by weight to 0.40 parts by weight, a total sugar content of less than 5 parts by weight, and a degree of sweetness of 9 to 10°, and a production method thereof. Patent Document 3 discloses that the pH of a product can be adjusted in the production of an ornithine-containing alcohol-free malt beverage that retains an excellent flavor of the alcohol-free malt beverage by adding an organic acid with ornithine hydrochloride and ornithine aspartate.

### CITATION LIST

### PATENT DOCUMENTS

- Patent Document 1:: Japanese patent application unexamined publication No.H1-165358
- Patent Document 2:: Japanese patent domestic publication No. 2009-532042
- Patent Document 3:: Japanese patent application unexamined publication No. 2011-139687

### SUMMARY OF INVENTION

### TECHNICAL PROBLEM

However, there is no sufficient study of a means to provide the robust feel to a beer-taste beverage, especially a low-extract-component, beer-taste beverage having a low concentration of ingredients including malt. The object of the present invention is to provide a beer-taste beverage whose total amount of an extract component(s) is low, that is provided with the robust feel.

### SOLUTION TO PROBLEM

The present inventors conducted intensive studies. They consequently found that adjusting the pH to a specific range in a beer-taste beverage with a low total amount of the extract component(s) provides the robust feel, and additionally, appropriate sourness to the beverage; the inventors thus completed the invention.

The present invention relates to, but are not limited to, the following matters.
1 A beer-taste beverage whose total amount of an extract component(s) is 2.0% by weight or lower, having a pH of 2.7 or higher and 4.5 or lower.
2 The beer-taste beverage according to 1, wherein the total amount of the extract component(s) is 1.0% by weight or lower.
3 The beer-taste beverage according to 2, wherein the total amount of the extract component(s) is 0.5% by weight or lower.
4 The beer-taste beverage according to 3, wherein the total amount of the extract component(s) is 0.3% by weight or lower.
5 The beer-taste beverage according to any one of 1 to 4, wherein the total amount of the extract component(s) is 0.01% by weight or higher.
6 The beer-taste beverage according to any one of 1 to 5, wherein the pH is 3.0 or higher and 4.5 or lower.
7 The beer-taste beverage according to 6, wherein the pH is 3.0 or higher and 4.2 or lower.
8 The beer-taste beverage according to any one of 1 to 7, that comprises one or more compound(s) selected from a group consisting of lactic acid, citric acid, phosphoric acid, malic acid, succinic acid and salts thereof as a pH conditioner.
9 The beer-taste beverage according to 8, that comprises one or more compound(s) selected from a group consisting of lactic acid, citric acid, phosphoric acid, malic acid, and succinic acid as the pH conditioner.
10 The beer-taste beverage according to 8 or 9, that comprises one or more combination(s) selected from a group of combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof as the pH conditioner.
11 The beer-taste beverage according to any one of 1 to 10 having a calorie content of 8.0 kcal/100 ml or lower.
12 The beer-taste beverage according to 11 wherein the calorie content is 5.0 kcal/100 ml or lower.
13 The beer-taste beverage according to 12, wherein the calorie content is 2.0 kcal/100 ml or lower.
14 The beer-taste beverage according to 13, wherein the calorie content is 1.4 kcal/100 ml or lower.
15 The beer-taste beverage according to any one of 11 to 14, wherein the calorie content is 0.04 kcal/100 ml or higher.
16 The beer-taste beverage according to any one of 11 to 15 having a saccharide content of 2.0 g/100 ml or lower.
17 The beer-taste beverage according to 16 wherein the saccharide content is 0.5 g/100 ml or lower.
18 The beer-taste beverage according to 17 wherein the saccharide content is 0.3 g/100 ml or lower.
19 The beer-taste beverage according to any one of 16 to 18 wherein the saccharide content is 0.01 g/100 ml or higher.
20 The beer-taste beverage according to any one of 1 to 19, wherein the beer-taste beverage is a non-alcohol, beer-taste beverage.
21 The beer-taste beverage according to any one of 1 to 20, wherein the beer-taste beverage is a non-fermented, beer-taste beverage.
22 A production method of a beer-taste beverage comprising the steps of:
   adjusting a total amount of an extract component(s) in the beverage so that the total amount of the extract component(s) is 2.0% by weight or lower; and
   adjusting a pH of the beverage to 2.7 or higher and 4.5 or lower using a pH conditioner.
23 The production method according to 22, wherein the total amount of the extract component(s) in the beverage is adjusted so that the total amount of the extract component(s) is 1.0% by weight or lower.
24 The production method according to 23, wherein the total amount of the extract component(s) in the beverage is adjusted so that the total amount of the extract component(s) is 0.5% by weight or lower.
25 The production method according to 24, wherein the total amount of the extract component(s) in the beverage is adjusted so that the total amount of the extract component(s) is 0.3% by weight or lower.
26 The production method according to any one of 22 to 25, wherein the total amount of the extract component(s) in the beverage is adjusted so that the total amount of the extract component(s) is 0.01% by weight or higher.
27 The production method according to any one of 22 to 26, wherein the pH of the beverage is adjusted to 3.0 or higher and 4.5 or lower.
28 The production method according to 27, wherein the pH of the beverage is adjusted to 3.0 or higher and 4.2 or lower.
29 The production method according to any one of 22 to 28, wherein the pH conditioner comprises one or more compound(s) selected from a group consisting of lactic acid, citric acid, phosphoric acid, malic acid, succinic acid and salts thereof.
30 The production method according to 29, wherein the pH conditioner comprises one or more compound(s) selected from a group consisting of lactic acid, citric acid, phosphoric acid, malic acid, and succinic acid.
31 The production method according to 29 or 30, wherein the pH conditioner comprises one or more combination(s) selected from a group of combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof.
32 The production method according to any one of 22 to 31, further comprising a step of adjusting a calorie content of the beer-taste beverage to 8.0 kcal/100 ml or lower.
33 The production method according to 32, wherein the calorie content of the beer-taste beverage is adjusted to 5.0 kcal/100 ml or lower.
34 The production method according to 33, wherein the calorie content of the beer-taste beverage is adjusted to 2.0 kcal/100 ml or lower.
35 The production method according to 34, wherein the calorie content of the beer-taste beverage is adjusted to 1.4 kcal/100 ml or lower.
36 The production method according to any one of Claims 32 to 35, wherein the calorie content of the beer-taste beverage is adjusted to 0.04 kcal/100 ml or higher.
37 The production method according to any one of 22 to 36, further comprising a step of adjusting a saccharide content in the beer-taste beverage to 2.0 g/100 ml or lower.
38 The production method according to 37, wherein the saccharide content in the beer-taste beverage is adjusted to 0.5 g/100 ml or lower.
39 The production method according to 38, wherein the saccharide content in the beer-taste beverage is adjusted to 0.3 g/100 ml or lower.
40 The production method according to any one of 37 to 39, wherein the saccharide content in the beer-taste beverage is adjusted to 0.01 g/100 ml or higher.
41 The production method according to any one of 22 to 40, wherein the beer-taste beverage is a non-alcohol, beer-taste beverage.
42 The production method according to any one of 22 to 41, which is a method that is exclusive of fermentation.
43 A method for providing a robust feel and appropriate sourness to a beer-taste beverage, by adjusting a total amount of an extract component(s) in the beverage so that the total amount of the extract component(s) is 2.0% by weight or lower and adjusting a pH of the beverage to 2.7 or higher and 4.5 or lower using a pH conditioner.
44 The method according to 43, wherein the total amount of the extract component(s) in the beverage is adjusted so that the total amount of the extract component(s) is 1.0% by weight or lower.
45 The method according to 44, wherein the total amount of the extract component(s) in the beverage is adjusted so that the total amount of the extract component(s) is 0.5% by weight or lower.
46 The method according to 45, wherein the total amount of the extract component(s) in the beverage is adjusted so that the total amount of the extract component(s) is 0.3% by weight or lower.
47 The method according to any one of 43 to 46, wherein the total amount of the extract component(s) in the beverage is adjusted so that the total amount of the extract component(s) is 0.01% by weight or higher.
48 The method according to any one of 43 to 47, wherein the pH is adjusted to 3.0 or higher and 4.5 or lower.
49 The method according to 48, wherein the pH is adjusted to 3.0 or higher and 4.2 or lower.
50 The method according to any one of 43 to 49, wherein the pH conditioner comprises one or more compound(s) selected from a group consisting of lactic acid, citric acid, phosphoric acid, malic acid, succinic acid and salts thereof.
51 The method according to 50, wherein the pH conditioner comprises one or more compound(s) selected from a group consisting of lactic acid, citric acid, phosphoric acid, malic acid, and succinic acid.
52 The method according to 50 or 51, wherein the pH conditioner comprises of one or more combination(s) selected from a group of combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof.
53 The method according to any one of 43 to 52, further comprising a step of adjusting a calorie content of the beer-taste beverage to 8.0 kcal/100 ml or lower.
54 The method according to 53, wherein the calorie content of the beer-taste beverage is adjusted to 5.0 kcal/100 ml or lower.
55 The method according to 54, wherein the calorie content of the beer-taste beverage is adjusted to 2.0 kcal/100 ml or lower.
56 The method according to 55, wherein the calorie content of the beer-taste beverage is adjusted to 1.4 kcal/100 ml or lower.
57 The method according to any one of 53 to 56, wherein the calorie content of the beer-taste beverage is adjusted to 0.04 kcal/100 ml or higher.
58 The method according to any one of 43 to 57, further comprising a step of adjusting a saccharide content in the beer-taste beverage to 2.0 g/100 ml or lower.
59 The method according to 58, wherein the saccharide content in the beer-taste beverage is adjusted to 0.5 g/100 ml or lower.
60 The method according to 59, wherein the saccharide content in the beer-taste beverage is adjusted to 0.3 g/100 ml or lower.
61 The method according to any one of 58 to 60, wherein the saccharide content in the beer-taste beverage is adjusted to 0.01 g/100 ml or higher.
62 The method according to any one of 43 to 61, wherein the beer-taste beverage is a non-alcohol, beer-taste beverage.
63 The method according to any one of 43 to 62, that is a method that is exclusive of fermentation.

### ADVANTAGEOUS EFFECTS OF INVENTION

The present invention provides beer-taste beverage having a low total amount of the extract component(s) that is provided with the robust feel and additionally with appropriate sourness.

The expression "robust feel" in the present specification means that there is a reasonably strong body and mouthfeel, and richness in taste.

### DESCRIPTION OF EMBODIMENTS

The present invention relates to a beer-taste beverage whose total amount of the extract component(s) is 2.0% by weight or lower, having a pH of 2.7 or higher and 4.5 or lower, a production method thereof, and a method for providing the robust feel to the beer-taste beverage with a low total amount of the extract component(s).

### <Beer-Taste Beverage>

The term "beer-taste beverages" as used herein refers to carbonated drinks having a beer-like flavor. Thus, unless otherwise noted, beer-taste beverages as referred to herein embrace all types of carbonated drinks with a beer flavor whether or not they are produced via a yeast-based fermentation step.

The term "non-alcohol beer-taste beverage" in the present specification refers to a beer-taste beverage that is alcohol-free. It should be noted here that the state of being alcohol-free in the present specification encompasses the inclusion of alcohol in a trace amount that is too small to be detected. Included within the scope of the non-alcohol beer-taste beverage of the present invention are beverages the alcohol content of which is calculated to be 0.0%, in particular, 0.00% by counting fractions of 5 and over as a unit and cutting away the rest. The present invention relates to a beer-taste beverage, having a low total amount of the extract component(s), that is provided with the robust feel and further provided with appropriate sourness. Such effects of the present invention are especially significant for a non-alcohol, low-extract-component, beer-taste beverage.

The above non-alcohol beer-taste beverage is a beer-taste beverage that is alcohol-free, so it may be a beverage that is produced without performing a fermentation step, that is, a non-fermented beer-taste beverage. In the present specification, the term "without performing a fermentation step" refers to the lack of decomposition of organic matters by microorganism, and it specifically refers to the lack of alcohol developing from decomposition of organic matters by yeast. In the present specification, a method that is carried out "without performing a fermentation step" is also described as a method that is "exclusive of fermentation", and the above "non-fermented beer-taste beverage" also means a beverage that is produced by a production method that is "exclusive of fermentation". Exemplary types of the non-fermented, non-alcohol, beer-taste beverages include non-alcohol, beer-taste beverages, beer-taste soft drinks, and the like.

The alcohol content in the beer-taste beverage in the present specification is the content of alcohol in the beverage (v/v%); the alcohol can be measured by using any known method, and for example by using an oscillating densimeter. Specifically, the beverage is filtered or subjected to ultrasonication to prepare a sample that is free of carbon rich gas; the sample is put under direct fire for distillation to obtain a distilled solution; and the density of the solution is measured at 15°C. "Table 2 Conversion Table for Alcohol and Density (15°C) and Specific Gravity (15/15°C)" in the appendix table to the Predetermined Analysis Method of the National Tax Agency (Directive No. 6 of the National Tax Agency in 2007, revised June 22, 2007) is used to convert the above measurement to obtain the alcohol content in the beverage. Further, alcohols that are at a low concentration (e.g. lower than 1.0 v/v%) can be measured using a commercial alcohol measurement device or gas chromatography or the like.

The amount of carbon rich gas contained in the beer-taste beverage is represented by the carbon rich gas pressure of the beverage, and the amount is not particularly limited as long as it does not hinder the effects of the present invention. Typically, the upper limit of the carbon rich gas pressure of the beverage is 4.0 kg/cm², 3.4 kg/cm² or 2.8 kg/cm², the lower limit is 0.2 kg/cm², 0.9 kg/cm², or 1.5 kg/cm², and any combinations of these upper limits and these lower limits are possible. The carbon rich gas pressure of the beverage can be in the ranges of 0.2 kg/cm² or higher and 4.0 kg/cm² or lower, 0.2 kg/cm² or higher and 3.4 kg/cm² or lower, 0.9 kg/cm² or higher and 2.8 kg/cm² or lower, or 1.5 kg/cm² or higher and 2.8 kg/cm² or lower. The term "gas pressure" in the present specification refers to the gas pressure in a container, except for special cases. The pressure can be measured by using methods well known to a person skilled in the art, such as a method of fixing a sample adjusted to a temperature of 20°C to the gas internal pressure meter, then opening the stopcock of the gas internal pressure meter to release gas before closing the stopcock again, then shaking the gas internal pressure meter to read the value of the needle after it stabilizes at a position; or by using a commercial gas pressure measuring device (e.g. Gas Volume Measurement Device GVA-500A, produced by Kyoto Electronics Manufacturing Co., Ltd).

### <Extract Component(s)>

The beer-taste beverage of the present invention is a beverage with a low total amount of the extract component(s). The lower the total amount of the extract component(s) in the beverage, the more likely the beverage is to be recognized as a beverage oriented to health (a beverage with a low calorie content and a low saccharide content). The present invention is an effective technology for such beer-taste beverages with a low total amount of the extract component(s).

In most cases, the total amount of the extract component(s) of general beer and *happoshu* is approximately higher than 2% by weight and 4% by weight or lower, which leads to the assumption that non-alcohol beer-taste beverages can also be designed to have a total amount of the extract component(s) at an equivalent level. However, the effects of the present invention, that is, the effect of providing the robust feel and the effect of providing appropriate sourness, are not particularly required in beverages containing the extract component(s) at a specific amount or higher as mentioned above. This is because the extract component(s) in beer-taste beverages tend to contain ingredients derived from *mugi*, such as malt, and beverages with a high total amount of the extract component(s) are likely to be provided with the robust feel from such ingredients.

Further, it is considered that the effect of the present invention, which is to impart the robust feel by adjusting the pH to a specific range, will not be exhibited in beer-taste beverages containing the extract component(s) at a specific amount or higher. The technology of the present invention has advantageous effects in beverages that have insufficient robust feel.

For example, the advantageous effect of the present invention of providing the robust feel was not exhibited in a beer-taste beverage having a total amount of the extract component(s) that is higher than 2.0% by weight, but such an effect was exhibited in a beer-taste beverage having a total amount of the extract component(s) that is 2% by weight or lower. Accordingly, when the present specification mentions that the total amount of the extract component(s) is low, it indicates that the total amount of the extract component(s) of the beer-taste beverage is, for example, 2.0% by weight or lower, preferably 1.0% by weight or lower, more preferably 0.5% by weight or lower, even more preferably 0.4% by weight or lower, still more preferably 0.3% by weight, and most preferably 0.1% by weight or lower. The lower limit of the total amount of the extract component(s) is not particularly limited, since the technology of the present invention is effective in beverages having a poor robust feel, but examples of the lower limit are 0.01% by weight or higher, preferably 0.05% by weight or higher. Any numerical ranges having the upper limits and the lower limits as shown above can be adopted. For example, the total amount of the extract-component(s) in the beer-taste beverage can be in ranges of 0.01 % by weight or higher and 2.0% by weight or lower, 0.01% by weight or higher and 1.0% by weight or lower, 0.01% by weight or higher and 0.5% by weight or lower, 0.01% by weight or higher and 0.4% by weight or lower, 0.01% by weight or higher and 0.3% by weight or lower, 0.01% by weight or higher and 0.1% by weight or lower, 0.05% by weight or higher and 2.0% by weight or lower, 0.05% by weight or higher and 1.0% by weight or lower, 0.05% by weight or higher and 0.5% by weight or lower, 0.05% by weight or higher and 0.4% by weight or lower, 0.05% by weight or higher and 0.3% by weight or lower, or 0.05% by weight or higher and 0.1% by weight or lower.

The extract component(s) in the beer-taste beverage of the present invention are derived from ingredients such as malt, rice, maize, kaoliang, potato, starch, *mugi* other than malt, and saccharides, and the ingredients increase or decrease the amount of the component(s). Strictly speaking, the increase and decrease may also be caused by other ingredients, such as hops and flavors.

The method for adjusting the total amount of the extract component(s) is not particularly limited, but exemplary methods include a method of adjusting the amount of ingredients providing the extract component(s), such as malt and other *mugi* used as ingredients, and a method of diluting an intermediate.

In the case of beverages having an alcohol content of at least 0.005 %, the "amount of extract component(s)" as used herein refers to the value of grams of extract component(s) as specified in the Japanese Liquor Tax Act, namely, the nonvolatile matter contained in a unit volume of 100 cubic centimeters at a temperature of 15 degrees; in the case of beverages the alcohol content of which is less than 0.005 %, the term refers to the extract level (% by weight) in degassed samples as measured in accordance with "Beer Analysis Methods (2004.11.1 Revised ed.), 7.2 Extracts" specified by Brewery Convention of Japan (BCOJ) of Brewers Association of Japan.

### <pH>

In the present invention, the pH of the low-extract-component beer-taste beverage is adjusted to a specific range. That is, an effect of providing the robust feel to the beer-taste beverages and an effect of providing appropriate sourness are exhibited when the pH is set to 2.7 or higher aid 4.5 or lower. The upper limit of the pH can be set as pH of 4.5 or lower, preferably pH of 4.2 or lower, and most preferably pH of 4.0 or lower. The lower limit of the pH can be set as pH of 2.7 or higher, preferably pH of 3.0 or higher, and most preferably pH of 3.5 or higher. When the pH is lower than 2.7, unpleasant sourness can be felt. Any numerical ranges having the upper limits and the lower limits as shown above can be adopted. For example, the pH of the beer-taste beverage can be in ranges of 2.7 or higher and 4.5 or lower, 2.7 or higher and 4.2 or lower, 2.7 or higher and 4.0 or lower, 3.0 or higher and 4.5 or lower, 3.0 or higher and 4.2 or lower, 3.0 or higher and 4.0 or lower, 3.5 or higher and 4.5 or lower, 3.5 or higher and 4.2 or lower, or 3.5 or higher and 4.0 or lower.

The pH of the beer-taste beverage can be adjusted using a pH conditioner. A known pH conditioner can be used, and a pH conditioner that is certified as an additive for food can be preferably used.

An alkalizer or an acidulant can be used as a pH conditioner. Acidulants are preferable for use, since beer-taste beverages are often weakly-acidic. Exemplary acidulants include lactic acid, citric acid, phosphoric acid, malic acid, succinic acid, acetic acid, ascorbic acid, tartaric acid, phytic acid, gluconic acid including glucono-delta-lactone, and carbonic acid. Lactic acid, citric acid, phosphoric acid, malic acid, or succinic acid is preferable from the view point of harmonizing the taste of the beer-taste beverage. These acidulants can be used in the form of salt, such as a potassium salt or sodium salt, or in the form of a buffer.

These pH conditioners can be used alone, or two or more can be combined for use. For example, the pH conditioners may comprise one or more combinations selected from a group of a combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof. A preferable combination is that of lactic acid or a salt thereof and phosphoric acid or a salt thereof.

The amount of pH conditioner to be used can be adjusted as necessary. The amount differs depending on the pH conditioner used, but an amount of the pH conditioner, as calculated for its free form, of approximately 0.0001 mg/100 L or higher, 1 kg/100 L or lower can be used.

### <Low-saccharide or low-calorie>

A preferable embodiment of the beer-taste beverage of the present invention is a beer-taste beverage having a low saccharide content or a low calorie content. The technology of the present invention can be used advantageously in such an embodiment, since beverages should be made low-extract-component to accomplish the above characteristics.

The upper limit of the saccharide content in the low-saccharide beer-taste beverage of the present invention is 2.0 g/100 ml or lower, preferably 1.9 g/100 ml or lower, more preferably 1.0 g/100 ml or lower, even more preferably 0.9 g/100 ml or lower, even more preferably 0.5 g/100 ml or lower, still more preferably 0.3 g/100 ml or lower. The lower limit of the saccharide content in the above beverage is 0.01 g/100 ml or higher, preferably 0.04 g/100 ml or higher, more preferably 0.1 g/100 ml or higher, and even more preferably 0.2 g/100 ml or higher, without being limited thereby. Any numerical ranges having the upper limits and the lower limits as shown above can be adopted. The saccharide content of the beer-taste beverage can be in ranges of 0.01 g/100 ml or higher and 2.0 g/100 ml or lower, 0.01 g/100 ml or higher and 1.9 g/100 ml or lower, 0.01 g/100 ml or higher and 1.0 g/100 ml or lower, 0.01 g/100 ml or higher and 0.9 g/100 ml or lower, 0.01 g/100 ml or higher and 0.5 g/100 ml or lower, 0.01 g/100 ml or higher and 0.3 g/100 ml or lower, 0.04 g/100 ml or higher and 2.0 g/100 ml or lower, 0.04 g/100 ml or higher and 1.9 g/100 ml or lower, 0.04 g/100 ml or higher and 1.0 g/100 ml or lower, 0.04 g/100 ml or higher and 0.9 g/100 ml or lower, 0.04 g/100 ml or higher and 0.5 g/100 ml or lower, 0.04 g/100 ml or higher and 0.3 g/100 ml or lower, 0.1 g/100 ml or higher and 2.0 g/100 ml or lower, 0.1 g/100 ml or higher and 1.9 g/100 ml or lower, 0.1 g/100 ml or higher and 1.0 g/100 ml or lower, 0.1 g/100 ml or higher and 0.9 g/100 ml or lower, 0.1 g/100 ml or higher and 0.5 g/100 ml or lower, 0.1 g/100 ml or higher and 0.3 g/100 ml or lower, 0.2 g/100 ml or higher and 2.0 g/100 ml or lower, 0.2 g/100 ml or higher and 1.9 g/100 ml or lower, 0.2 g/100 ml or higher and 1.0 g/100 ml or lower, 0.2 g/100 ml or higher and 0.9 g/100 ml or lower, 0.2 g/100 ml or higher and 0.5 g/100 ml or lower, or 0.2 g/100 ml or higher and 0.3 g/100 ml or lower.

The term "saccharides" as used herein refers to ones based on the Nutrition Labelling Standards for Foods (Health, Labor and Welfare Ministry Notice No. 176 in 2003). The saccharide content in beverages can be calculated by subtracting the amount of protein, fat, dietary fiber, ash, alcohol and water from the weight of the entire beverage. The protein, fat, dietary fiber, ash and water can be measured by the method in the Nutrition Labeling Standards. Specifically, the amount of proteins is measured by the nitrogen determination and conversion method, the amount of lipids by the ether extraction method, the chloroform/methanol mixed liquid extraction method, the Gerber method, the acid decomposition method or the Roese-Gottlieb method, the amount of dietary fiber by high-performance liquid chromatography or the ashing method with added sulfuric acid, and the amount of water by the Karl-Fischer method, the drying aid method, the method of drying by heating under reduced pressure, the method of drying by heating under atmospheric pressure, or the plastic film method. These measurement methods are commonly known among persons skilled in the art.

The upper limit of the calorie content in the low-calorie beer-taste beverage of the present invention is 8.0 kcal/100 ml or lower, preferably 7.7 kcal/100 ml or lower, more preferably 5.0 kcal/100 ml or lower, even more preferably 4 or 4.0 kcal/100 ml or lower, still more preferably 3.8 kcal/100 ml or lower, still even more preferably 2.0 kcal/100 ml or lower, more preferably 1.6 kcal/100 ml or lower and most preferably 1.4 kcal/100 ml or lower. The lower limit of the calorie content in the above beverage is 0.04 kcal/100 ml or higher, preferably 0.1 kcal/100 ml or higher, more preferably 0.4 kcal/100 ml or higher, even more preferably 1 kcal/100 ml or higher, without being limited thereby. Any numerical ranges having the upper limits and the lower limits as shown above can be adopted. For example, the calorie content of the beer-taste beverages can be in ranges of 0.04 kcal/100 ml or higher and 8.0 kcal/100 ml or lower, 0.04 kcal/100 ml or higher and 7.7 kcal/100 ml or lower, 0.04 kcal/100 ml or higher and 5.0 kcal/100 ml or lower, 0.04 kcal/100 ml or higher and 4 or 4.0 kcal/100 ml or lower, 0.04 kcal/100 ml or higher and 3.8 kcal/100 ml or lower, 0.04 kcal/100 ml or higher and 2.0 kcal/100 ml or lower, 0.04 kcal/100 ml or higher and 1.6 kcal/100 ml or lower, 0.04 kcal/100 ml or higher and 1.4 kcal/100 ml or lower, 0.1 kcal/100 ml or higher and 8.0 kcal/100 ml or lower, 0.1 kcal/100 ml or higher and 7.7 kcal/100 ml or lower, 0.1 kcal/100 ml or higher and 5.0 kcal/100 ml or lower, 0.1 kcal/100 ml or higher and 4 or 4.0 kcal/100 ml or lower, 0.1 kcal/100 ml or higher and 3.8 kcal/100 ml or lower, 0.1 kcal/100 ml or higher and 2.0 kcal/100 ml or lower, 0.1 kcal/100 ml or higher and 1.6 kcal/100 ml or lower, 0.1 kcal/100 ml or higher and 1.4 kcal/100 ml or lower, 0.4 kcal/100 ml or higher and 8.0 kcal/100 ml or lower, 0.4 kcal/100 ml or higher and 7.7 kcal/100 ml or lower, 0.4 kcal/100 ml or higher and 5.0 kcal/100 ml or lower, 0.4 kcal/100 ml or higher and 4 or 4.0 kcal/100 ml or lower, 0.4 kcal/100 ml or higher and 3.8 kcal/100 ml or lower, 0.4 kcal/100 ml or higher and 2.0 kcal/100 ml or lower, 0.4 kcal/100 ml or higher and 1.6 kcal/100 ml or lower, 0.4 kcal/100 ml or higher and 1.4 kcal/100 ml or lower, 1 kcal/100 ml or higher and 8.0 kcal/100 ml or lower, 1 kcal/100 ml or higher and 7.7 kcal/100 ml or lower, 1 kcal/100 ml or higher and 5.0 kcal/100 ml or lower, 1 kcal/100 ml or higher and 4 or 4.0 kcal/100 ml or lower, 1 kcal/100 ml or higher and 3.8 kcal/100 ml or lower, 1 kcal/100 ml or higher and 2.0 kcal/100 ml or lower, 1 kcal/100 ml or higher and 1.6 kcal/100 ml or lower, or 1 kcal/100 ml or higher and 1.4 kcal/100 ml or lower.

The calorie content in the beverages is calculated basically in accordance with "On Analysis Methods, etc. for Nutrients, etc. Listed in the Nutrition Labelling Standards" as published in association with the Health Promotion Act. In other words, as a rule, the calorie can be obtained by multiplying the quantified amount of each nutrient with its energy conversion factor (protein: 4 kcal/g, fat: 9 kcal/g, saccharide: 4 kcal/g, dietary fiber: 2 kcal/g, alcohol: 7 kcal/g, organic acid: 3 kcal/g) and totaling the products. For details, see "On Analysis Methods, etc. for Nutrients, etc. Listed in the Nutrition Labelling Standards." Specific techniques for measuring the amounts of the respective nutrients contained in beverages may comply with the various methods of analysis described in "On Analysis Methods, etc. for Nutrients, etc. Listed in the Nutrition Labelling Standards" as a supplement to the Health Promotion Act. Alternatively, the Japan Food Research Laboratories (Foundation) will provide such calorific values and/or the amounts of the respective nutrients upon request.

### <Other Additives>

Various components can be added in the present invention as long as they do not hinder the advantageous effects of the present invention, if necessary. For example, sweeteners, flavors, yeast extracts, colorants such as caramel colors, proteinaceous substances including plant protein- and peptide-containing substances such as corn or soybean, dietary fiber and seasonings such as amino acids, antioxidants such as ascorbic acid, and various acidulants can be added as long as they do not hinder the advantageous effects of the present invention, if necessary.

### <Production of Beer-Taste Beverages>

The beer-taste beverage of the present invention can be produced, for example, by the method described below.

Briefly, *mugi* such as malt and, optionally, such ingredients as other cereal grains, starches, sugars, bitterness imparting agents or colorants are charged into a mashing kettle or tank where gelatinization and saccharification are performed, optionally in the presence of an added enzyme such as amylase; the saccharified mash is then filtered, boiled in the presence of optionally added hops, and transferred to a clarification tank to remove solids such as coagulated proteins. The saccharification, boiling and solids removal steps may be performed under known conditions.

The term *"mugi"* as used herein means Poaceae grains with similar appearances (usually their berry), as well as their processed products. It includes barley, wheat, rye, *karasumugi* (white oats), oat, *hatomugi* (Job's tears), *embaku* (oats), and the one preferably used is barley. The above *mugi* may or may not be germinated, but germinated *mugi* is preferable in the present invention. Malt is more preferable among the germinated *mugi.* Malt as mentioned in the present specification is a product obtained by drying the sprouts of *mugi,* and removing their roots. A single type can be used alone or two or more types can be combined for use.

Hops are desirably used as an ingredient, since they have a tendency to produce beer-taste beverages having a flavor that is similar to those of beer. If hops are to be used, ordinary pelletized hops, powdered hops, and hop extracts that are used in the manufacture of beer and like beverages can be used as selected appropriately for the desired flavor. Processed hops such as isomerized hops and reduced hops may also be used. These are all encompassed by the hops to be used in the present invention. The amount of hops to be added is not particularly limited and it is typically at least about 0.0001 wt% but not greater than about 1 wt% of the total quantity of the beverage.

The beer-taste beverage of the present invention is preferably produced by a method that is exclusive of fermentation. For example, non-fermented non-alcohol beer-taste beverage can be obtained by performing the steps of storage, addition of carbon rich gas, filtration, filling in a container, and optionally sterilization, after the above solids removal step is completed, without being subjected to the fermentation step.

The technology of the present invention can be applied to any beer-taste beverage having a low amount of the extract component(s). For example, it can be applied to a low-alcohol beer-taste beverage having an alcohol content of 1% or lower. Such a low-alcohol beer-taste beverage can be produced by being subjected to a fermentation step. For example, yeast can be added after the above solids removal step to induce fermentation, then yeast can be removed by a filter. The fermentation condition can be set as necessary based on known knowledge. The alcohol concentration can be reduced by known methods such as membrane process and dilution, as necessary. A low-alcohol beer-taste beverage can otherwise be produced by adding ingredients containing alcohol, such as spirits, to the non-fermented non-alcohol beer-taste beverage instead of subjecting the beverage to a fermentation step.

A low-alcohol beer-taste beverage can be obtained by further performing the steps of storage, optionally addition of carbon rich gas, filtration, filling in a container, and optionally sterilization.

The production method of the present invention includes a step of adjusting the total amount of the extract component(s) in the beer-taste beverage so that the total amount of the extract component(s) is 2.0% by weight or lower. A preferable total amount of the extract component(s), a preferable adjustment method thereof, and so on are as described above in relation to the beer-taste beverage.

The production method of the present invention further comprises a step of adjusting the pH of the beer-taste beverage to 2.7 or higher and 4.5 or lower using a pH conditioner. A preferable range of the pH, a pH conditioner that can be used, a preferable example thereof, the amount of its use, and so on, are as described above in relation to the beer-taste beverage.

The production method also includes a step of adjusting the saccharide content in the beer-taste beverage as necessary. The saccharide content or the like in the beverage is as described above in relation to the beer-taste beverage.

The production method also includes a step of adjusting the calorie content in the beer-taste beverage as necessary. The calorie content value or the like in the beverage is as described above in relation to the beer-taste beverage.

The total amount of the extract component(s), pH, saccharide content, and calorie content can be adjusted at any time in the production steps. For example, the adjustment can be performed before, during or after any of the steps, or it can be performed before, during or after multiple steps. It is only necessary that the final beverages fall in the desired ranges. For example, the step of adjusting the pH should preferably be performed before filtration for ease of production.

The sequence of the above adjustment steps is not limited, and two or more of the steps can be performed together.

### <Method for providing robust feel and appropriate sourness>

The beer-taste beverage of the present invention is provided with the robust feel and appropriate sourness by having its total amount of the extract component(s) adjusted to 2.0% by weight or lower, and its pH adjusted to 2.7 or higher and 4.5 or lower.

The method of the present invention for providing the robust feel and appropriate sourness includes a step of adjusting the total amount of the extract component(s) in the beer-taste beverage so that the total amount of the extract component(s) is 2.0% by weight or lower. Preferable total amounts of the extract component(s), a preferable adjustment method thereof, and so on are as described above in relation to the beer-taste beverage.

The present method also comprises a step of adjusting the pH of the beer-taste beverage to 2.7 or higher and 4.5 or lower by using a pH conditioner. The preferable range of pH, a pH conditioner that can be used, a preferable example thereof, and the amount of its use, and so on are as described above in relation to the beer-taste beverage.

The method also includes a step of adjusting the saccharide content in the beer-taste beverage as necessary. The saccharide content or the like in the beverage is as described above in relation to the beer-taste beverage.

The method also includes a step of adjusting the calorie content in the beer-taste beverage as necessary. The calorie content value or the like in the beverage is as described above in relation to the beer-taste beverage.

The total amount of the extract component(s), pH, saccharide content, and calorie content can be adjusted at any time in producing the beer-taste beverages, or after the production. For example, the adjustment can be performed before, during or after any of the steps, or it can be performed before, during or after multiple steps. It is only necessary that the final beverages fall in the desired ranges. For example, the step of adjusting the pH should preferably be performed before filtration for ease of production.

The sequence of the above adjustment steps is not limited, and two or more of the steps can be performed together. The robust feel and appropriate sourness can be assessed by a sensory test conducted by well-trained panelists.

### <Beverages Packed in Containers>

The non-alcohol beer-taste beverages of the present invention can be packed in containers by filling a container with the beverage and sealing it. Containers of any shape or material can be used; examples include bottles, cans, kegs, and PET bottles.

### EXAMPLES

The present invention is described in more detail by the Examples, without being limited in scope thereby.

### [Example 1]

### <Production of Non-Alcohol Beer-Taste Beverages>

Non-alcohol beer-taste beverages were produced by the following method. Malt (20 kg) was crushed to an appropriate grain size and put in a tank for preparation, then 120 L of warm water was added to form a mash of about 50°C. The mash was kept at 50°C for 30 minutes, followed by a gradual increase in the temperature to between 65°C and 72°C to conduct saccharification for 60 minutes. The mash after saccharification has completed was heated to 77°C, then transferred to the wort filtering tank for filteration to obtain a filtrate.

Warm water was added to a portion of the obtained filtrate. The mixture ratio of the filtrate and warm water was conditioned so that the total amount of the extract component(s) at the end of the boiling described below is about 4.0% by weight. The resultant mixture was adjusted to a production scale of 100 L, and it was boiled at 100°C for 80 minutes after about 100 g of hops and about 40 g of a marketable caramel color (Class I) were added. Lees were separated from the boiled liquid, and the remnant was cooled to about 2°C to give a cooled solution.

To portions of the cooled solution, an appropriate amount of cold water was added to dilute them so that the total amount of the extract component(s) in the final products is 0.01% by weight. Using lactic acid as a pH conditioner, the pH conditioner (first time), an anti-oxidant, a flavor, and a sweetener were added to the diluted solutions at appropriate amounts and the solutions were stored for about 24 hours. Then, the pH conditioner was added again (second time), followed by an appropriate amount of carbon rich gas, and subsequently, the beverages obtained were filtered, filled in a container and sterilized (heated at 65°C or higher, for 10 minutes) to prepare non-fermented, non-alcohol, beer-taste beverages. The amount of the pH conditioner (in first time and second time) was adjusted to prepare Control product 1 having a pH of 5.5 and Invention product 1 having a pH of 3.0, obtained using more pH conditioner than Control product 1. Similarly, Control products 2 to 5 (having total amounts of the extract component(s) that are from 0.1 to 2.0% by weight) having a pH adjusted to 5.5, and Invention products 2 to 5 (having total amounts of the extract component(s) that are from 0.1 to 2.0% by weight) having a pH adjusted to 3.0 were prepared.

### <Assessment of Flavor>

The robust feel of the non-alcohol beer-taste beverages prepared above was assessed using a sensory test based on the following rating system. The body, intensity of the feel and richness in taste were assessed comprehensively as the robust feel, keeping in mind that the total amounts of the extract component(s) in the samples in the present test are extremely low in comparison to normal beer or *happoshu.* Four well-trained panelists rated the level of the robust feel on a scale of 1 to 4, which is "identifiable"=4, "somewhat identifiable"=3, "slightly identifiable"=2, "not identifiable"= 1, and the average of the ratings were obtained. Then, a separate rating scale of 1 to 3 was set forth according to the obtained average.

| | |
|---|---|
| Average value 1.0 or higher to lower than 2.0 | ×; |
| Average value 2.0 or higher to lower than 3.0 | Δ |
| Average value 3.0 or higher to 4.0 or lower | ○. |

The results are shown in Table 1.

Upon comparing Invention product 1 and Control product 1, having a total amount of the extract component(s) of 0.01% by weight, Invention product 1 having a pH adjusted to 3.0 was rated higher concerning the robust feel than Control product 1 having a pH adjusted to 5.5. Likewise, upon comparing Invention product 2 and Control product 2, having a total amount of the extract component(s) of 0.1 % by weight, Invention product 2 having a pH adjusted to 3.0 was rated higher concerning the robust feel than Control product 2 having a pH adjusted to 5.5. Although a tendency was observed that the difference in the ratings of the invention products having a pH adjusted to 3.0 and the control products having a pH adjusted to 5.5 narrowed as the total amount of the extract component(s) increased, it was seen that the invention products had a better robust feel than the control products when the maximum of total amount of the extract component(s) is 2.0% or lower, or preferably 1.0% or lower. In other words, it was found that the robust feel can be provided by controlling pH in a beverage with a total amount of the extract component(s) that is extremely low, namely that having a total amount of the extract component(s) of 2.0% by weight or lower, preferably 1.0% by weight or lower.

[Table 1]

**Table 1**

| Sample | Invention product 1 | Invention product 2 | Invention product 3 | Invention product 4 | Invention product 5 | Control product 1 | Control product 2 | Control product 3 | Control product 4 | Control product 5 |
|---|---|---|---|---|---|---|---|---|---|---|
| Extract component(s) (wt%) | 0.01 | 0.1 | 0.5 | 1.0 | 2.0 | 0.01 | 0.1 | 0.5 | 1.0 | 2.0 |
| pH | 3.0 | 3.0 | 3.0 | 3.0 | 3.0 | 5.5 | 5.5 | 5.5 | 5.5 | 5.5 |
| pH Conditioner | lactic acid | lactic acid | lactic acid | lactic acid | lactic acid | lactic acid | lactic acid | lactic acid | lactic acid | lactic acid |
| Calorie (kcal/100ml) | 0.04 | 0.4 | 1.9 | 3.8 | 7.7 | 0.04 | 0.4 | 1.9 | 3.8 | 7.7 |
| Saccharide Content (g/100ml) | 0.01 | 0.1 | 0.5 | 0.9 | 1.9 | 0.01 | 0.1 | 0.5 | 0.9 | 1.9 |
| Robust Feel Average | 3.0 | 3.3 | 3.3 | 4.0 | 4.0 | 1.0 | 1.5 | 2.3 | 3.0 | 3.8 |
| Robust Feel | ○ | ○ | ○ | ○ | ○ | × | × | Δ | ○ | ○ |

### [Example 2]

### <Study of Optimum Range of pH>

Non-alcohol beer-taste beverages having a total amount of the extract component(s) adjusted to 0.1% by weight were produced in line with the method of Example 1. By adding the a pH conditioner (first time and second time) in the process, the pH was adjusted to 2.5 to produce Control product 6 and the pH was adjusted to from 2.7 to 4.5 to produce Invention products 6 to 10, and the pH was adjusted to from 5.0 to 6.0 to produce Control products 7 and 8.

The robust feel and sourness of the obtained beer-taste beverages were assessed. Four experienced panelists performed sensory tests based on the rating system and rated the robust feel and sourness on a scale of 1 to 4.

The robust feel was rated according to the method of Example 1.

The rating of sourness was as follows: "not identifiable"=4, "slightly identifiable"=3, "somewhat identifiable"=2, "identifiable"= 1.

The ratings were averaged, and a separate rating scale of 1 to 3 was set forth according to the obtained average.

| | |
|---|---|
| Average value 1.0 or higher to lower than 2.0 | ×; |
| Average value 2.0 or higher to lower than 3.0 | Δ |
| Average value 3.0 or higher to 4.0 or lower | ○. |

The result is shown in Table 2. According to the result of assessing the robust feel, Control products 7 and 8 having pH values adjusted to 5.0 and 6.0 were lowly assessed concerning the robust feel. On the other hand, Invention products 6 to 10 and Control product 6 having pH values adjusted to 4.5 or lower were highly assessed concerning the robust feel.

According to the assessment result of sourness, Control product 6 having a pH adjusted to 2.5 was rated lowly concerning sourness. On the other hand, Invention products 6 to 10 and Control products 7 and 8 having pH values adjusted to 4.5 or lower were rated highly concerning sourness.

[Table 2]

**Table 2**

| Sample | Control product 6 | Invention product 6 | Invention product 7 | Invention product 8 | Invention product 9 | Invention product 10 | Control product 7 | Control product 8 |
|---|---|---|---|---|---|---|---|---|
| Extract component(s) (wt%) | 0.1 | 0.1 | 0.1 | 0.1 | 0.1 | 0.1 | 0.1 | 0.1 |
| pH | 2.5 | 2.7 | 3.0 | 3.5 | 4.0 | 4.5 | 5.0 | 6.0 |
| pH Conditioner | lactic acid | lactic acid | lactic acid | lactic acid | lactic acid | lactic acid | lactic acid | lactic acid |
| Calorie (kcal/100ml) | 0.4 | 0.4 | 0.4 | 0.4 | 0.4 | 0.4 | 0.4 | 0.4 |
| Saccharide Content (g/100ml) | 0.1 | 0.1 | 0.1 | 0.1 | 0.1 | 0.1 | 0.1 | 0.1 |
| Robust Feel | ○ | ○ | ○ | ○ | ○ | Δ | × | × |
| Sourness | × | Δ | ○ | ○ | ○ | ○ | ○ | ○ |

The above result indicates that the only samples that were rated highly for both the robust feel and sourness were Invention products 6 to 10 having pH values adjusted to from 2.7 to 4.5. The result showed that the robust feel can be provided to a beer-taste beverage having a low total amount of the extract component(s) without allowing unpleasant sourness to develop, by adjusting the pH to a range of from 2.7 to 4.5.

### [Production Example 1]

### <Production of Non-Alcohol Beer-Taste Beverage>

Beer-taste beverages of the present invention (Invention products 11 to 13) having total amounts of the extract component(s) in the desired range (0.2% by weight, 0.3% by weight, and 0.4% by weight) were produced by the following method. Using malt in 20 kg (60% by weight of which consisted of dark colored malt called caramel malt), a crushed result of the malt in an appropriate grain size was put in a tank for preparation, then 120 L of warm water was added to form a mash of about 50°C. The mash was kept at 50°C for 30 minutes, followed by a gradual increase in the temperature to between 65°C and 72°C to conduct saccharification for 60 minutes. The mash after saccharification has completed was heated to 77°C, then transferred to the wort filtering tank for filteration to obtain a filtrate. Warm water was added to portions of the obtained filtrate. The mixture ratios of the portions of the filtrate and warm water were conditioned so that the total amounts of the extract component(s) became the desired values at the end of the boiling stated below. The mixtures were adjusted to a production scale of 100 L, and they were boiled at 100°C for 80 minutes after about 100 g of hops were added to them. Lees were separated from the boiled liquids, and the remnants were cooled to about 2°C; then, appropriate amounts of antioxidants, flavors, and acidulants (lactic acid was added in an amount that makes the final pH 3.5), sweetners, and optionally a caramel color were added before storage for about 24 hours. An appropriate amount of carbon rich gas was added during that process. Then, they were subjected to the steps of filtration, filling in the container, and sterilization (heated at 65°C or higher for 10 minutes) to produce beer-taste beverages of Invention products 11 to 13. Invention product 11 having a total amount of the extract component(s) of 0.2% by weight had an alcohol content of 0.00%, a calorie content of 0.7 kcal/100 ml and a saccharide content of 0.2 g/100 ml. Invention product 12 having a total amount of the extract component(s) of 0.3% by weight had an alcohol content of 0.00%, a calorie content of 1.2 kcal/100 ml and a saccharide content of 0.3 g/100 ml. Invention product 13 having a total amount of the extract component(s) of 0.4% by weight had an alcohol content of 0.00%, a calorie content of 1.6 kcal/100 ml and a saccharide content of 0.4 g/100 ml. These beverages had desirable taste (in terms of the robust feel and sourness) and they were comparable to Invention products 7 to 9.

### [Production Example 2]

### <Production of Non-Alcohol Beer-Taste Beverage>

Two types of beer-taste beverages of the present invention, having a total amount of the extract component(s) adjusted to 0.35% by weight and a pH adjusted to 4.2 or 3.2, were produced according to a method similar to Example 1. The two types of beer-taste beverages that were produced had an alcohol content of 0.00%, a calorie content of 1.4 kcal/100 ml and a saccharide content of 0.3 g/100 ml. These beverages had desirable taste (in terms of the robust feel and sourness) and they were comparable to Invention products 7 to 9.

### [Production Example 3]

### <Production of Non-Alcohol Beer-Taste Beverage>

Two types of beer-taste beverages of the present invention, having a total amount of the extract component(s) adjusted to 0.45% by weight and a pH adjusted to 4.2 or 3.2, were produced according to a method similar to Example 1. The two types of beer-taste beverages that were produced had an alcohol content of 0.00%, a calorie content of 2 kcal/100 ml and a saccharide content of 0.4 g/100 ml. These beverages had desirable taste (in terms of the robust feel and sourness) and they were comparable to Invention products 7 to 9.

### [Production Example 4]

### <<Production of Low-Alcohol Beer-Taste Beverage>

Beer-taste beverages having a total amount of the extract component(s) of 0.2% by weight were produced according to a method similar to Example 1 (the amount of filtrate to be used after saccharification was adjusted), using malt containing 50% by weight of caramel malt. To the beverages were added an aqueous solution of ethanol to obtain an ethanol concentration of 0.95 v/v% and to produce beer-taste beverages having an alcohol content that is lower than 1%. The beverages thus produced had an alcohol content of 0.95%, a calorie content of 6.1 kcal/100 ml and a saccharide content of 0.1 g/100 ml. And the beverages had desirable taste (in terms of the robust feel and sourness).

### [Production Example 5]

### <Production of Non-Alcohol Beer-Taste Beverage>

Succinic acid was used as the pH conditioner to produce non-alcohol beer-taste beverages. Two types of beer-taste beverages of the present invention, having a total amount of the extract component(s) adjusted to 0.35% by weight and a pH adjusted to 4.2 or 3.2, were produced according to a method similar to Production Example 2 other than that succinic acid was used as the pH conditioner. The two types of beer-taste beverages that were produced had an alcohol content of 0.00%, a calorie content of 2 kcal/100 ml and a saccharide content of 0.4 g/100ml. These beverages had desirable taste (in terms of the robust feel and sourness).

### [Example 3]

Citric acid or malic acid was used as a pH conditioner to produce non-alcohol beer-taste beverages shown in Table 3 in line with the method of Example 2. The total amount of the extract component(s) was 0.6% by weight (citric acid) or 1% by weight (malic acid). The robust feel and sourness of the obtained beer-taste beverages were assessed. Five well-trained panelists performed sensory tests based on the rating system and rated the robust feel and sourness on a scale of 1 to 4. The rating system used was the same as that of Examples 1 and 2. The result is shown in Table 3.

The result showed that the robust feel can also be provided to a beer-taste beverage having a low total amount of the extract component(s) without allowing unpleasant sourness to develop, by adjusting the pH to a specific range, for cases using citric acid or malic acid as a conditioner.

[Table 3]

**Table 3**

| Sample | Control sample | Invention sample | Invention sample | Invention sample |
|---|---|---|---|---|
| Extract component(s) (wt%) | 0.6 | 0.6 | 0.6 | 0.6 |
| pH | 2.5 | 3.5 | 4.0 | 4.5 |
| pH Conditioner | citric acid | citric acid | citric acid | citric acid |
| Calorie (kcal/100ml) | 2.3 | 2.3 | 2.3 | 2.3 |
| Saccharide Content (g/100ml) | 0.6 | 0.6 | 0.6 | 0.6 |
| Robust Feel | ○ | ○ | Δ | Δ |
| Sourness | × | Δ | ○ | ○ |
| | | | | |

| Sample | Control sample | Invention sample | Invention sample | Invention sample |
|---|---|---|---|---|
| Extract component(s) (wt%) | 1 | 1 | 1 | 1 |
| pH | 2.5 | 3.5 | 4.0 | 4.5 |
| pH Conditioner | malic acid | malic acid | malic acid | malic acid |
| Calorie (kcal/100ml) | 3.8 | 3.8 | 3.8 | 3.8 |
| Saccharide Content (g/100ml) | 0.9 | 0.9 | 0.9 | 0.9 |
| Robust Feel | ○ | ○ | Δ | Δ |
| Sourness | × | Δ | ○ | ○ |

### [Example 4]

Phosphoric acid was used as a pH conditioner to produce non-alcohol beer-taste beverages. These beverage were produced according to a method similar to Example 2 other than that phosphorate acid was used as a pH conditioner. In addition, lactic acid and phosphoric acid were combined for use as a pH conditioner to produce separate beer-taste beverages. The pH conditioner used was prepared by mixing lactic acid and phosphoric acid (molar ratio 1:1) in advance. Otherwise, the method of Example 2 was followed to produce the beverages. The robust feel and sourness of the obtained non-alcohol beer-taste beverages were assessed. Five panelists performed sensory tests based on the rating system and rated the robust feel and sourness on a scale of 1 to 4. The rating system used was the same as that of Examples 1 and 2. The results are shown in Table 4 and Table 5.

The result showed that the robust feel can also be provided to a beer-taste beverage having a low total amount of the extract component(s) without unpleasant sourness developing, by adjusting the pH to a specific range, for cases using phosphoric acid or a combination of lactic acid and phosphoric acid as pH conditioners.

[Table 4]

**Table 4**

| Sample | Control product | Invention product | Invention product | Invention product | Invention product | Control product | Control product |
|---|---|---|---|---|---|---|---|
| Extract component(s) (wt%) | 0.1 | 0.1 | 0.1 | 0.1 | 0.1 | 0.1 | 0.1 |
| pH | 2.5 | 3.0 | 3.5 | 4.0 | 4.5 | 5.0 | 6.0 |
| pH Conditioner | phosphoric acid | phosphoric acid | phosphoric acid | phosphoric acid | phosphoric acid | phosphoric acid | phosphoric acid |
| Calorie (kcal/100ml) | 0.4 | 0.4 | 0.4 | 0.4 | 0.4 | 0.4 | 0.4 |
| Saccharide Content (g/100ml) | 0.1 | 0.1 | 0.1 | 0.1 | 0.1 | 0.1 | 0.1 |
| Robust Feel | ○ | ○ | ○ | ○ | Δ | × | × |
| Sourness | × | Δ | ○ | ○ | ○ | ○ | ○ |

[Table 5]

**Table 5**

| Sample | Control product | Invention product | Invention product | Invention product | Invention product | Control product | Control product |
|---|---|---|---|---|---|---|---|
| Extract component(s) (wt%) | 0.1 | 0.1 | 0.1 | 0.1 | 0.1 | 0.1 | 0.1 |
| pH | 2.5 | 3.0 | 3.5 | 4.0 | 4.5 | 5.0 | 6.0 |
| pH Conditioner | phosphoric acid + lactic acid | phosphoric acid + lactic acid | phosphoric acid + lactic acid | phosphoric acid + lactic acid | phosphoric acrid+ lactic acid | phosphoric acrid+ lactic acid | phosphoric acid + lactic acid |
| Calorie (kcal/100ml) | 0.4 | 0.4 | 0.4 | 0.4 | 0.4 | 0.4 | 0.4 |
| Saccharide Content (g/100ml) | 0.1 | 0.1 | 0.1 | 0.1 | 0.1 | 0.1 | 0.1 |
| Robust Feel | ○ | ○ | ○ | ○ | Δ | × | × |
| Sourness | × | Δ | Δ | ○ | ○ | ○ | ○ |

## Claims

1. A beer-taste beverage whose total amount of an extract component(s) is 2.0% by weight or lower, having a pH of 2.7 or higher and 4.5 or lower.

2. The beer-taste beverage according to Claim 1, wherein the total amount of the extract component(s) is 1.0% by weight or lower.

3. The beer-taste beverage according to Claim 2, wherein the total amount of the extract component(s) is 0.5% by weight or lower.

4. The beer-taste beverage according to Claim 3, wherein the total amount of the extract component(s) is 0.3% by weight or lower.

5. The beer-taste beverage according to any one of Claims 1 to 4, wherein the total amount of the extract component(s) is 0.01% by weight or higher.

6. The beer-taste beverage according to any one of Claims 1 to 5, wherein the pH is 3.0 or higher and 4.5 or lower.

7. The beer-taste beverage according to 6, wherein the pH is 3.0 or higher and 4.2 or lower.

8. The beer-taste beverage according to any one of Claims 1 to 7, that comprises one or more compound(s) selected from a group consisting of lactic acid, citric acid, phosphoric acid, malic acid, succinic acid and salts thereof as a pH conditioner.

9. The beer-taste beverage according to Claim 8, that comprises one or more compound(s) selected from a group consisting of lactic acid, citric acid, phosphoric acid, malic acid, and succinic acid as the pH conditioner.

10. The beer-taste beverage according to Claim 8 or 9, that comprises one or more combination(s) selected from a group of combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof as the pH conditioner.

11. The beer-taste beverage according to any one of Claims 1 to 10 having a calorie content of 8.0 kcal/100 ml or lower.

12. The beer-taste beverage according to Claim 11 wherein the calorie content is 5.0 kcal/100 ml or lower.

13. The beer-taste beverage according to Claim 12, wherein the calorie content is 2.0 kcal/100 ml or lower.

14. The beer-taste beverage according to Claim 13, wherein the calorie content is 1.4 kcal/100 ml or lower.

15. The beer-taste beverage according to any one of Claims 11 to 14, wherein the calorie content is 0.04 kcal/100 ml or higher.

16. The beer-taste beverage according to any one of Claims 11 to 15 having a saccharide content of 2.0 g/100 ml or lower.

17. The beer-taste beverage according to Claim 16 wherein the saccharide content is 0.5 g/100 ml or lower.

18. The beer-taste beverage according to Claim 17 wherein the saccharide content is 0.3 g/100 ml or lower.

19. The beer-taste beverage according to any one of Claims 16 to 18 wherein the saccharide content is 0.01g/100 ml or higher.

20. The beer-taste beverage according to any one of Claims 1 to 19, wherein the beer-taste beverage is a non-alcohol, beer-taste beverage.

21. The beer-taste beverage according to any one of Claims 1 to 20, wherein the beer-taste beverage is a non-fermented, beer-taste beverage.

22. A production method of a beer-taste beverage comprising the steps of:
adjusting a total amount of an extract component(s) in the beverage so that the total amount of the extract component(s) is 2.0% by weight or lower; and
adjusting a pH of the beverage to 2.7 or higher and 4.5 or lower using a pH conditioner.

23. The production method according to Claim 22, wherein the total amount of the extract component(s) in the beverage is adjusted so that the total amount of the extract component(s) is 1.0% by weight or lower.

24. The production method according to Claim 23, wherein the total amount of the extract component(s) in the beverage is adjusted so that the total amount of the extract component(s) is 0.5% by weight or lower.

25. The production method according to Claim 24, wherein the total amount of the extract component(s) in the beverage is adjusted so that the total amount of the extract component(s) is 0.3% by weight or lower.

26. The production method according to any one of Claims 22 to 25, wherein the total amount of the extract component(s) in the beverage is adjusted so that the total amount of the extract component(s) is 0.01% by weight or higher.

27. The production method according to any one of Claims 22 to 26, wherein the pH of the beverage is adjusted to 3.0 or higher and 4.5 or lower.

28. The production method according to Claim 27, wherein the pH of the beverage is adjusted to 3.0 or higher and 4.2 or lower.

29. The production method according to any one of Claims 22 to 28, wherein the pH conditioner comprises one or more compound(s) selected from a group consisting of lactic acid, citric acid, phosphoric acid, malic acid, succinic acid and salts thereof.

30. The production method according to Claim 29, wherein the pH conditioner comprises one or more compound(s) selected from a group consisting of lactic acid, citric acid, phosphoric acid, malic acid, and succinic acid.

31. The production method according to Claim 29 or 30, wherein the pH conditioner comprises one or more combination(s) selected from a group of combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof.

32. The production method according to any one of Claims 22 to 31, further comprising a step of adjusting a calorie content of the beer-taste beverage to 8.0 kcal/100 ml or lower.

33. The production method according to Claim 32, wherein the calorie content of the beer-taste beverage is adjusted to 5.0 kcal/100 ml or lower.

34. The production method according to Claim 33, wherein the calorie content of the beer-taste beverage is adjusted to 2.0 kcal/100 ml or lower.

35. The production method according to Claim 34, wherein the calorie content of the beer-taste beverage is adjusted to 1.4 kcal/100 ml or lower.

36. The production method according to any one of Claims 32 to 35, wherein the calorie content of the beer-taste beverage is adjusted to 0.04 kcal/100 ml or higher.

37. The production method according to any one of Claims 22 to 36, further comprising a step of adjusting a saccharide content in the beer-taste beverage to 2.0 g/100 ml or lower.

38. The production method according to Claim 37, wherein the saccharide content in the beer-taste beverage is adjusted to 0.5 g/100 ml or lower.

39. The production method according to Claim 38, wherein the saccharide content in the beer-taste beverage is adjusted to 0.3 g/100 ml or lower.

40. The production method according to any one of Claims 37 to 39, wherein the saccharide content in the beer-taste beverage is adjusted to 0.01g/100 ml or higher.

41. The production method according to any one of Claims 22 to 40, wherein the beer-taste beverage is a non-alcohol, beer-taste beverage.

42. The production method according to any one of Claims 22 to 41, which is a method that is exclusive of fermentation.

43. A method for providing a robust feel and appropriate sourness to a beer-taste beverage, by adjusting a total amount of an extract component(s) in the beverage so that the total amount of the extract component(s) is 2.0% by weight or lower and adjusting a pH of the beverage to 2.7 or higher and 4.5 or lower using a pH conditioner.

44. The method according to Claim 43, wherein the total amount of the extract component(s) in the beverage is adjusted so that the total amount of the extract component(s) is 1.0% by weight or lower.

45. The method according to Claim 44, wherein the total amount of the extract component(s) in the beverage is adjusted so that the total amount of the extract component(s) is 0.5% by weight or lower.

46. The method according to Claim 45, wherein the total amount of the extract component(s) in the beverage is adjusted so that the total amount of the extract component(s) is 0.3% by weight or lower.

47. The method according to any one of Claims 43 to 46, wherein the total amount of the extract component(s) in the beverage is adjusted so that the total amount of the extract component(s) is 0.01% by weight or higher.

48. The method according to any one of Claims 43 to 47, wherein the pH is adjusted to 3.0 or higher and 4.5 or lower.

49. The method according to Claim 48, wherein the pH is adjusted to 3.0 or higher and 4.2 or lower.

50. The method according to any one of Claims 43 to 49, wherein the pH conditioner comprises one or more compound(s) selected from a group consisting of lactic acid, citric acid, phosphoric acid, malic acid, succinic acid and salts thereof.

51. The method according to Claim 50, wherein the pH conditioner comprises one or more compound(s) selected from a group consisting of lactic acid, citric acid, phosphoric acid, malic acid, and succinic acid.

52. The method according to Claim 50 or 51, wherein the pH conditioner comprises of one or more combination(s) selected from a group of combination(s) of acids or salts, consisting of lactic acid or a salt thereof and citric acid or a salt thereof, lactic acid or a salt thereof and phosphoric acid or a salt thereof, lactic acid or a salt thereof and malic acid or a salt thereof, lactic acid or a salt thereof and succinic acid or a salt thereof, citric acid or a salt thereof and phosphoric acid or a salt thereof, citric acid or a salt thereof and malic acid or a salt thereof, citric acid or a salt thereof and succinic acid or a salt thereof, phosphoric acid or a salt thereof and malic acid or a salt thereof, phosphoric acid or a salt thereof and succinic acid or a salt thereof, and malic acid or a salt thereof and succinic acid or a salt thereof.

53. The method according to any one of Claims 43 to 52, further comprising a step of adjusting a calorie content of the beer-taste beverage to 8.0 kcal/100 ml or lower.

54. The method according to Claim 53, wherein the calorie content of the beer-taste beverage is adjusted to 5.0 kcal/100 ml or lower.

55. The method according to Claim 54, wherein the calorie content of the beer-taste beverage is adjusted to 2.0 kcal/100 ml or lower.

56. The method according to Claim 55, wherein the caloric content of the beer-taste beverage is adjusted to 1.4 kcal/100 ml or lower.

57. The method according to any one of Claims 53 to 56, wherein the calorie content of the beer-taste beverage is adjusted to 0.04 kcal/100 ml or higher.

58. The method according to any one of Claims 43 to 57, further comprising a step of adjusting a saccharide content in the beer-taste beverage to 2.0 g/100 ml or lower.

59. The method according to Claim 58, wherein the saccharide content in the beer-taste beverage is adjusted to 0.5 g/100 ml or lower.

60. The method according to Claim 59, wherein the saccharide content in the beer-taste beverage is adjusted to 0.3 g/100 ml or lower.

61. The method according to any one of Claims 58 to 60, wherein the saccharide content in the beer-taste beverage is adjusted to 0.01 g/100 ml or higher.

62. The method according to any one of Claims 43 to 61, wherein the beer-taste beverage is a non-alcohol, beer-taste beverage.

63. The method according to any one of Claims 43 to 62, that is a method that is exclusive of fermentation.
